# EUROPEAN PATENT SPECIFICATION

(11) **EP 1 491 000 B1**
(45) Date of publication and mention of the grant of the patent: **05.09.2007**
(21) Application number: 03744864.4
(22) Date of filing: 27.03.2003
(51) Int. Cl.: H04L 12/24

(54) **NETWORK MANAGEMENT SYSTEM**
NETZWERKVERWALTUNGSSYSTEM
SYSTEME DE GESTION DE RESEAU

(30) Priority: 27.03.2002 EP 02007008; 14.03.2003 WO PCT/EP03/02704
(43) Date of publication of application: 29.12.2004
(73) Proprietor: Lightmaze Solutions AG, 97249 Eisingen (DE)
(72) Inventor: JAHN, Elke, 97204 Höchberg (DE); AGRAWAL, Niraj, 97204 Höchberg (DE)
(74) Representative: Dr. Weitzel & Partner
(86) International application number: PCT/EP2003/003201
(87) International publication number: WO 2003/081845

(56) References cited:
- US-B1- 6 363 416
- HARRIS C D: "Bridging the network management gap: how element managers can streamline SONET network management and provide a migration path for broadband management" , COMPUTERS AND COMMUNICATIONS, 1995., CONFERENCE PROCEEDINGS OF THE 1995 IEEE FOURTEENTH ANNUAL INTERNATIONAL PHOENIX CONFERENCE ON SCOTTSDALE, AZ, USA 28-31 MARCH 1995, NEW YORK, NY, USA,IEEE, US, PAGE(S) 219-225 XP010149384 ISBN: 0-7803-2492-7 page 220, left-hand column, line 10 - line 13 page 220, right-hand column, line 1 - line 13 page 221, right-hand column, line 38 - line 51
- CUKIER M ET AL: "AQuA: an adaptive architecture that provides dependable distributed objects" , RELIABLE DISTRIBUTED SYSTEMS, 1998. PROCEEDINGS. SEVENTEENTH IEEE SYMPOSIUM ON WEST LAFAYETTE, IN, USA 20-23 OCT. 1998, LOS ALAMITOS, CA, USA,IEEE COMPUT. SOC, US, PAGE(S) 245-253 XP010319083 ISBN: 0-8186-9218-9 section 3.1

## Description

The present invention belongs to the field of communication systems, especially of optical communication networks, more particularly, to dense wavelength division multiplexed optical networks with arbitrary topology, e.g., point-two-point, ring, mesh, etc.

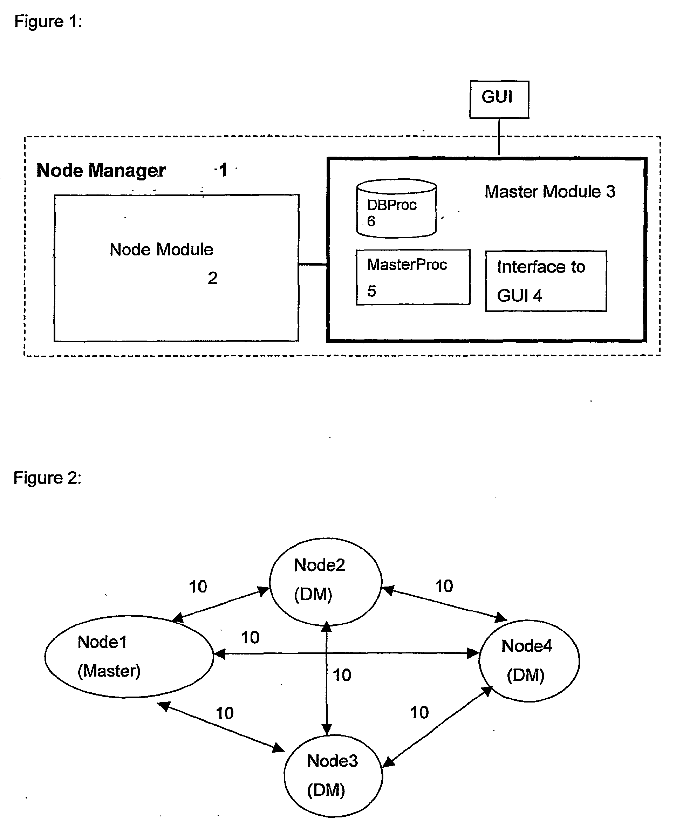

The soaring demand for virtual private networks, storage area networking, and other new high speed services are driving bandwidth requirements that test the limits of today's optical communications systems. In an optical network, a node is physically linked to another using one or more optical fibres (cf. Fig. 1). Each of the fibres can carry as many as one hundred or more communication channels, i.e., wavelengths in WDM (Wavelength Division Multiplex) or Dense WDM (DWDM) systems. Thus, for example, for a node with three neighbours as many as three hundred or more wavelength signals originate or terminate or pass through a given node. Each of the wavelengths may carry signals with data rates up to 10 Gbit/s or even higher. Thus each fibre is carrying several terabits of information. This is a tremendous amount of bandwidth and information that must be managed automatically, reliably, rapidly, and efficiently. It is evident that large amount of bandwidth needs to be provisioned. Fast and automatic provisioning enables network bandwidth to be managed on demand in a flexible, dynamic, and efficient manner. Another very important feature of such DWDM networks is reliability or survivability in presence of a failure such as an inadvertent fibre-cut, various types of hardware and software faults, etc. In such networks, in case of a failure, the user data is automatically rerouted to its destination via an alternate or restoration path.

In general, such networks are managed by a network management system which is adapted especially for a single existing network. However, when the existing network, especially its topology, is changed, the network management system must be re-configured by manually adapting of the hardware and software of several nodes. This is an expensive and time-consuming work, especially in the case of meshed networks. Furthermore, the known network management systems are not able to be implemented in networks with an arbitrary topology without manual adaptation of the network management system.

In this context, the paper HARRIS C D: "Bridging the network management gap: how Element Managers can streamline SONET network management and provide a migration path for broadband management" COMPUTERS AND COMMUNICATIONS, 1995., CONFERENCE PROCEEDINGS OF THE 1995 IEEE FOURTEENTH ANNUAL INTERNATIONAL PHOENIX CONFERENCE ON SCOTTSDALE, AZ, USA 28-31 MARCH 1995, NEW YORK, NY, USA, IEEE, US, PAGE(S) 219-225, XP010149384 ISBN: 0-7803-2492-7, discloses an Element Manager for a Synchronous Optical Network for enhanced operations capabilities to enable efficient control and to lower network and operations costs. The Element Manager is connected to various Network Elements by means of several gateway Network Elements. A primary function of the gateway Network Elements is to act as a gateway between the Element Manager and other Network Elements including the functions of protocol mediation. Inspite of these capabilities, SONET, which is designed for ring topology, can not support arbitrary network topology. Moreover, the aforementioned paper by HARRIS does not suggest automatic selection of an active Element Manager among a number of Element Managers replicated in the managed nodes.

Although the prior art disclosed in Patent US 6,363,416 B1 describes a method for automatic election of a representative node within a Communications Network, there is no hint of using this method for Element or Network Management.

It is an object of the present invention to overcome the disadvantages of the state of the art and especially to provide a network management system that could be implemented in a network with an arbitrary topology, and which provides a highly flexible and reliable managing of the network.

The object of the invention is realized by a method according to claim 1 and a network management system according to claim 11. The sub-claims provide preferable embodiments of the present invention.

In the network, especially the optical network, which is managed by the method according to the present invention multiple nodes are interconnected in an arbitrary topology. The management system is able to manage the whole network and provides intelligence for efficient and optimal use of network resources. The management system comprises preferably various software modules in each node. One software module is a node manager, for example, which takes care of the network management activities. A node manager in each node communicates with other node managers in other nodes through the supervisory network. The supervisory network is formed with the help of supervisory channels between the various nodes of the network. A physical supervisory channel between two nodes in the network might be carried over optical fibre or other types of transport media. Node managers in different nodes might communicate over logical supervisory connections established over one or more physical supervisory channels between various nodes. These logical supervisory connections might be configured manually or with the help of software modules in one or more network nodes. In a preferred embodiment this is done by using a software module called NetProc, which is described in the application PCT/EP03/02704, which has been filed on 14.03.2003 by the same applicant, and which is incorporated by reference into the present application. The NetProc provides the following supervisory network features:
1) Supervisory connection establishment between two network nodes. Each node can have one or more NetProcs. This architecture allows establishment of a direct logical supervisory connection between any arbitrary pair of nodes interconnected by the supervisory channel. Fault-tolerant or redundant connections through two or more paths. In a preferred embodiment these paths are node and link disjoint, as will be described in more detail. The management system uses NetProc's services to exchange messages with other nodes. Any supervisory data is sent through one or several or all of the available redundant connections. Each message is given a sequence number. On the receiving end the duplicate messages are discarded and only one, for example the first, of the arriving message is passed on to the supervisory management layer.
2) Hardware fault and software error detection on all paths of the supervisory channel and the associated auto-recovery to re-establish the supervisory channel. Error checking in the data transmission is done by using sequence numbers on the messages. The status of each connection is monitored by sending keep-alive messages at regular intervals. In the event that a reply to keep-alive message is not received within a specified time the connection is explicitly closed and the two nodes try to re-establish connection between themselves. The closing of connection(s) and attempts to re-establish them are done automatically.
3) Relaying information reliably to one or more network managers running on one or more network nodes or other work stations.
4) The management of the network is carried out by a node manager present in each node or at one or more nodes or other centralized locations. The various node managers communicate using the NetProc.

A preferred supervisory network has the flexibility to be configured by standard protocols like OSPF, MPLS or by using NetProc. Following features apply:
- The supervisory network topology is automatically discovered with the help of OSPF. Each node manager executes a single OSPF and the OSPF in each node is configured to talk with neighbouring nodes.
- The nodes discover their neighbours and exchange Link State Advertisements. Once the Link State adjacencies are formed and the OSPF converges on the topology, each node possesses the routing table and is able to reach other nodes over the supervisory channel.
- The status of the supervisory channel is monitored by OSPF and in the event of link failure the alternate routes are configured. Fault-tolerant connections are set up using two or more Label Switched Paths over two or more disjoint paths to each destination. Thus a signalling message sent to a node travels through multiple Label Switched Paths and reaches its appropriate destination.

According to the present invention a node module is provided in each node manager. Thereby, the module could be implemented in form of software or hardware or both. The node module in each node provides an interface to the hardware of the corresponding node. By each node module the hardware settings of the respective node could be amended and/or monitored.

The node manager is provided with a master module. The master module could also be implemented in form of software and/or hardware. The master module communicates through supervisory connections with the various node modules and controls the various amendments carried out by the different node modules and/or processes the hardware settings of the different nodes monitored by the corresponding node modules.

All of the node managers in the different nodes comprise a master module. The master module has an active state and a passive state which the master module might be set to. At a given time only one master module is allowed to be set to the active state. Such a master module might be called the Master and all the other master modules, which are in a passive state, might be called Deputy Master (DM). Only the master module that is in the active state (Master) controls the different amendments of hardware settings carried out by the node modules and processes the hardware settings monitored by the node modules.

Preferable embodiments of the present invention will be described in the following with reference to the accompanying drawings, in which
Figure 1 shows a preferable first architecture of a node manager;
Figure 2 shows the established supervisory connections between corresponding different nodes;
Figure 3 shows a second preferable architecture of a node manager with an attached master controller;
Figures 4 and 5 show reduced supervisory connections used in the shown second architecture.

The functions of a node manager (1) according to the embodiment shown in Figure 1 are separated into two main modules. The node module (2) takes care of the activities local to a node. Every node has a node module (2), which connects to one or more master modules (3) located at the same node or other nodes using the supervisory channel. Among other things, the node module (2) provides interface to the hardware and allows the master module (3) to make any changes or informs the master module (3) of any changes in the hardware properties. The second module called master module (3) is present in one or several or all nodes. The master module (3) includes MasterProc (5) for global and local network management, DBProc for database related tasks and features, Interface to GUI (4) to support the hardware element management and local and global network management. This is shown in Fig 1. Thereby, the term "Proc" denotes one or more software modules with predetermined functionality.

In addition to the node manager (1), there is a Graphical User Interface (GUI), which is used to input (or enter), output (or view), and modify various parameters and/or properties related to the node hardware. The GUI is also used to input (or enter), output (or view), and modify various parameters and/or properties related to the local and/or global network management. The GUI is connected to the master module (3) (cf. Fig. 1).

The functions of a master module (3) include
■ Receiving/sending node information from/to one or more nodes, reading, writing, and updating the database (DB) and providing an interface to the GUI.
■ Accepting user and/or hardware commands for modifying and/or updating node properties and sending them to the relevant nodes. Such commands may also be received from other nodes.
■ Processing network management related commands and messages, e.g., demand information from the user, which includes creation of demand, selection of one or more demand-paths, starting and stopping traffic for a demand, etc..
■ Monitoring the status of demands and providing protection or restoration actions in the event of one or more faults and/or errors in a demand.
■ Exchange of heartbeat messages and related processing
■ Database synchronization

The master module (3) according to the shown embodiment provides the following interfaces
■ Interface to the node module (2) in one or several or all nodes
■ Interface to the database
■ Interface to the GUI (4) in one or several or all nodes

Although there are several master modules (3) located in several network nodes, at a given time only one master module (3) may be active. Such a master module (3) might be designated as the Master and all the other master modules (3) as a Deputy Master (DM). Further, a master module (3) performs the tasks of the Master or a Deputy Master depending on the configuration. Such a configuration can be done statically or dynamically. It is also done automatically.

The node module (2) in each node needs a connection to the master module (3) and vice-versa. This connection is set-up over the supervisory channel using NetProc or equivalent software modules.

The Master located in a particular node coordinates all the network management activities. The Master is an essential part of the network management and needs to be functional all the time. It therefore becomes important to make sure that there is a backup or standby module, which takes over when the Master fails for some reason. For this purpose one or more Deputy Masters are designated as the backup or standby to the Master. These Deputy Masters take over the functions of the master module (3) when the Master fails. The master module (3) has different functionality based on whether it is the Master or a Deputy Master. The nodes where the Master and a Deputy Master are located are termed as the master node and a DM node, respectively. Finally, a full set of supervisory connections between all pairs of nodes which contain master module (3) are required in order to manage the redundancy and fault-tolerance with respect to the Master functionality. A full set of supervisory connections implies a supervisory connection between all pair of nodes. A reduced set of supervisory connections is defined as a set of those connections between a pair of nodes in which one of the nodes is the master node.

As the node manager software first comes up, a node preferably is always initialised to be a Deputy Master node. Following protocol is used in determining as to which node acts as a Master at a given time: 1) All nodes periodically exchange Heartbeat messages among each other, the contents of which are used to determine as to which node is the master node and also to monitor the status of master node by the various Deputy Master nodes. 2) A Heartbeat message contains the node ID of the sender node as well as its status, either Master or Deputy-Master. 3) The receiving node first examines the status of all the received Heartbeat Messages within a certain time interval. If it receives a Master status in any of the received Heartbeat messages, it remains in the same state as before without altering its status. If it does not receive a Master status in any of its Heartbeat messages, it compares its ID with other received IDs. If its ID is smaller than the received IDs it assumes the role of Master otherwise it remains in the same state as before without altering its status. As an alternative, if on start-up a node does not receive Heartbeat message from other nodes after sending a configurable number of Heartbeat messages it assumes the role of the Master. 4) If and only if the existing Master fails the new Master election process takes place. Master election is done by processing heartbeat messages as discussed above. 5) In case two nodes assume for any reason the unintended role of a master node it is resolved using the following protocol. Among the different master nodes the node with the lowest ID number retains the role of Master, all other master nodes revert their role to being a Deputy Master node.

Based on the contents of heartbeat messages there may be other procedures for selecting as to which master module acts as the Master, for example the master module in the node with the largest ID.

After the election is over, the master module (3) in master node takes over the operations of the network and performs the network management functions. The change of role of a particular node from a Deputy Master node to a master node should be performed as quickly and as seamlessly as possible to have minimum disruption in network operation. The master node and Deputy Master nodes perform additional functions for fault-tolerance. These include among other functions database synchronization between master node and Deputy Master nodes.

In the following sections two architectures for handling redundancy and fault-tolerance are presented.

The node manager corresponding to a first architecture is shown in Fig. 1. The master node and all the Deputy Master nodes are connected through the supervisory channel configured by NetProc or an equivalent software module. Using such supervisory connections (10) between each pair of nodes, each node module in each node sends all node-related information to the master node and to all the Deputy Master nodes as shown in Fig. 2, e.g., for a four node network. Exchange of heartbeat messages and related processing is done as discussed previously in this document.

The database in the master node and a Deputy Master node needs to be synchronized at all times. This ensures correct operation when the master node fails and a new master node is elected. After a new master node is elected, it sends the current dump (state) of the database to all other Deputy Master nodes before resuming its duty as a master node. This makes sure that the database in all nodes are synchronized before the nodes begin their management function. During normal operation, both the master node and all Deputy Master nodes receive messages from node modules in all nodes. Thus, the master module in each node updates the database located in that particular node. The difference in the functionality of Master versus Deputy Master is that a node acting as Deputy Master does not send any message to other nodes but only receives all node-related messages. The primary function of a Deputy Master node in this architecture is to perform the database synchronization. When a node comes up again after a failure and a master node already exists then the restored node requests for the current dump of the database from the master node.

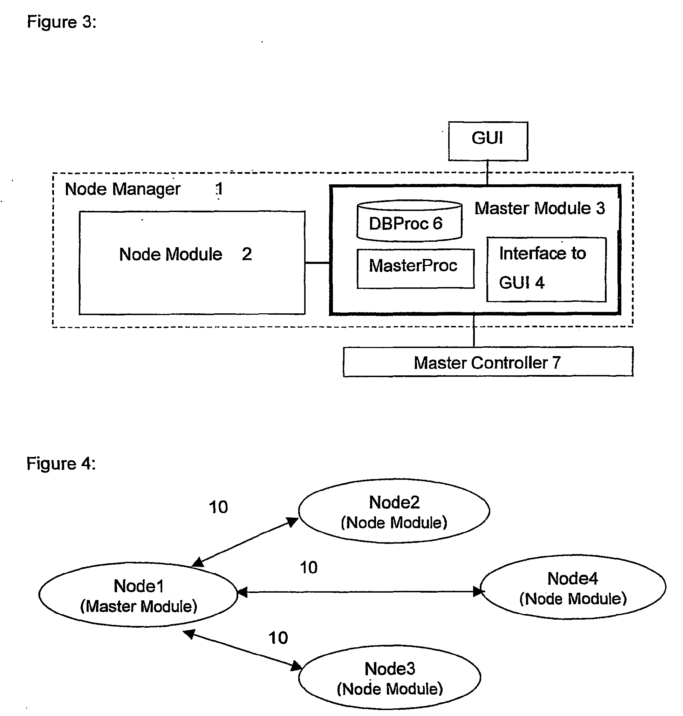

In the second architecture, there is an additional software module running at a node, namely, master controller as shown in Fig 3. The so-called master controller (4) is a module, which could be implemented by software and/or hardware.

The Node Module (2) and master controller (7) are active in all nodes of the network. However, the master module (3) is active only in the master node. In this architecture, it is the master controller (7) which takes part in master-election and role-change related steps, e.g., database synchronization. When the nodes come up for the first time, the Node Module (2) and master controller (7) are started in each node. The master module (3) is not started initially. The master controllers (7) in various nodes by exchanging and processing heartbeat messages among each other elect a particular node as the master node. Thereafter, it starts the master module (3) only in the master node (cf. Fig 3).

The master controller (7) in each node is connected to all other master controllers (7) in other nodes through the supervisory channel. The Node Module in different nodes is connected only to the master module (3) as shown in Fig 4 through a reduced set of supervisory connections (10).

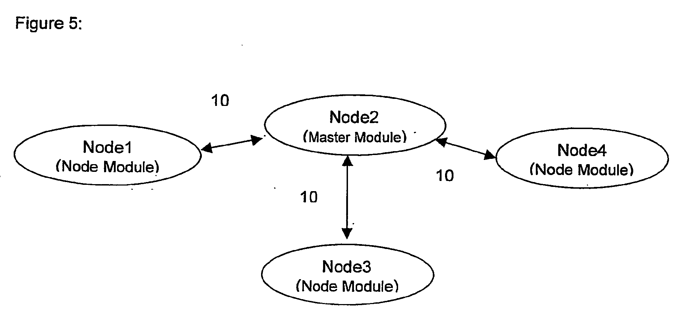

When the master node changes, e.g., from node 1 to node 2, the master controller (7) in that node, dynamically and automatically re-configures the connection between the node modules (2) and the new master module (3) as shown in Fig 5.

This dynamic reconfiguration is done using NetProc or other similar software modules and the master controller present in each node. The master controller sends a re-configure message to NetProc in each node, with the node ID of the new master node. The NetProc in each node on receiving the message re-configures the connections so that all the nodes have a logical supervisory connection to the new master node. The nodes can also be statically connected as in architecture 1 and the dynamic reconfiguration step can be avoided.

Exchange of heartbeat messages and related processing is done as discussed previously in this document.

The master controller (7) does the database synchronization between a pair of nodes. After a new master node is elected, the master controller (7) sends the current dump (state) of the database to all the master controllers(7) in Deputy Master nodes before starting the master module processes in the master node. This makes sure that the database in all nodes are synchronized before the nodes begin the management function. The master module (3) informs the master controller (7) of any changes in database and these changes are sent to all other master controllers (7) in other nodes in the network. The master controller (7) in other Deputy Master nodes on receiving the changes from the master node updates the local database. This keeps the database synchronized with the master node. When a node comes up again after a failure and a master node already exists then the restored node requests for the current dump of the database from the master node.

## Claims

1. A method of managing a network, especially an optical network, including a plurality of nodes which are interconnected in an arbitrary topology so as to be capable of carrying traffic between selected nodes, comprising the steps of
providing a supervisory network by means of supervisory channels between the nodes;
providing a node manager (1) which is comprised of one or more software modules in each node;
establishing of supervisory connections (10) over one or more supervisory channels between selected nodes through which the node manager (1) communicates with other node managers (1) in other nodes;
providing a node module (2) in each node manager (1) that provides an interface to the hardware settings of the respective node;
providing a master module (3) in at least one node manager (1);
establishing of supervisory connections (10) over one or more supervisory channels between selected nodes through which the master module (3) communicates with the node modules (2);
amending and/or monitoring of hardware settings in selected nodes with the respective node module (2) of the node;
controlling of the amendments carried out by the node modules (2) and/or processing of the monitored hardware settings by the master module (3), and
comprising the further steps of
providing a master module (3) in several or all node managers (1), whereby each master module (3) is either in an active state or a passive state;
setting of a single master module (3) to the active state and maintaining or setting of the other master modules (3) to the passive state; whereby
controlling of the amendments carried out by the node modules (2) and/or processing of the monitored hardware settings is carried out only by the master module (3) that is in the active state;
**characterized in that** the setting of the state of the several master modules (3) is done automatically.

2. The method of managing a network according to claim 1, comprising the further steps of
periodically generating heartbeat messages in each node and exchanging these messages among all nodes, whereby each heartbeat message contains information about the state of master module (3) of the respective node;
processing of the received heartbeat message in each node and setting of the state of the master module (3) in the respective node depending on the information in the received messages, such that always a single master module (3) of all nodes is in the active state.

3. The method of managing a network according to claim 2, comprising the further step of providing of each master module (3) with an initial passive state when the node manager (1) of the respective node is initialized, and whereby the changing of the state of the master module (3) in the respective node is made according to one of the following decisions:
if the master module (3) of the node is in the passive state and the node receives at least one heartbeat message that contains information about a master module (3) of another node being in the active state the master module (3) of the respective node remains in the passive state;
if the master module (3) of the node is in the passive state and the node receives no heartbeat message that contains information about a master module (3) of another node being in the active state within a predetermined time interval the master module of the respective node changes into the active state.

4. The method of managing a network according to claim 2 or claim 3, whereby each heartbeat message generated in each node further contains the node ID of the respective node and changing of the state of the master module (3) in the respective node according to one of the following decisions:
if the master module (3) of the node is in the passive state and the node receives at least one heartbeat message that contains information about a master module (3) of another node being in the active state the master module (3) of the respective node remains in the passive state;
if the master module (3) of the node is in the passive state and the node receives no heartbeat message that contains information about a master module (3) of another node being in the active state within a predetermined time the node compares its ID with other received IDs using a predetermined procedure and depending on the result of this procedure, especially if its ID is smaller than other received IDs, the master module (3) of the respective node changes into the active state;
if the master module (3) of the node is in the active state and the node receives no heartbeat message that contains information about a master module (3) of another node being in the active state within a predetermined time the master module of the respective node remains in the active state;
if the master module (3) of the node is in the active state and the node receives at least one heartbeat message that contains information about a master module (3) of another node being in the active state the node compares its ID with other received IDs using a predetermined procedure and depending on the result of this procedure, especially if its ID is not smaller than other received IDs, the master module (3) of the respective node changes into the passive state.

5. The method of managing a network according to one of claims 1 to 4, comprising the further steps of:
the node module (2) in each node communicates with the master module (3) either through a full set of supervisory connections (10) or a reduced set of supervisory connections (10); whereby
in the full set of supervisory connections (10), each node module (2) communicates with all master modules (3) present in one or more nodes, especially whether in the active state or passive state;
in the reduced set of supervisory connections (10), each node module (2) communicates only with a single master module (3) present in one node, or especially with a single master module (3) in an active state present in one node.

6. The method of managing a network according to one of claims 2 to 5, comprising the further steps of:
providing a master controller module (7) in each node which is connected to the master module (3) of the respective node;
the master controller modules (7) of different nodes generate, exchange and process the heartbeat messages and control the state of the master module (3) of the respective node.

7. The method of managing a network according to claim 6, whereby the node module (2) in each node communicates only with the master module (3) in the active state and in the case of changing the state of the master module (3) to the active state and a further master module to the passive state the supervisory connections (10) through which the communication takes place are reconfigured.

8. The method of managing a network according to claim 7, whereby the master controller module (7) of the node with the master module (3) that has been changed to the active state sends a reconfigure message to each node containing the ID of its node.

9. The method of managing a network according to one of claims 1 to 8, comprising the further steps of:
providing a database containing information relating to hardware state of each node as well as local and global network management activities in each node;
synchronizing of the database in each node according to the following steps before a master module (3) is set to the active state the corresponding node, especially the master controller module (7) of the corresponding node, sends the current state of the database of the corresponding node to all other nodes, especially the master controller (7) of all other nodes;
the receiving nodes, especially the master controller modules (7) of the receiving nodes, synchronize its database with the received state of database.

10. The method of managing a network according to claim 9, comprising the further steps of:
the master module (3) in each node informs the master controller (7) in the corresponding node of any changes in the database of the node;
the master controller (7) sends these changes to other master controllers (7) in all other nodes;
when a node comes up after a failure the master controller (7) in that node requests for the current state of the database from the master controller (7) of the node with the master module (3) in the active state to synchronize its database with the database of the node with the master module (2) in the active state.

11. A network management system of a network including a plurality of nodes which are interconnected in an arbitrary topology so as to be capable of carrying traffic between selected nodes, whereby
the nodes are interconnected by a supervisory network that is provided by supervisory channels between the nodes;
each node has a node manager (1) which communicates with other node managers (1) through a supervisory connection (10) established over one or more supervisory channels between selected nodes;
each node manager (1) includes a node module (2) which provides an interface to the hardware of this node which allows for amending and monitoring of amendments of the hardware settings of this node;
at least one node manager (1) includes a master module (3) which is connected to the various node modules (2) through supervisory connection (10) established over one or more supervisory channels between selected nodes;
the master module (3) provides functionality for controlling of the node modules (2) and the amending of the hardware settings and for processing of the hardware settings monitored by the node modules (2); whereby the network management system is equipped to carry out a method according to one of claims 1 to 10.

12. The network management system according to claim 11, whereby the master module (3) includes an interface to support one or more Graphical User Interfaces (GUI) located in one or more nodes.

13. The network management system according to claim 11 or 12, whereby the master module (3) includes one or more software modules for global and local network management and especially one or more software modules for database related tasks and features for a database containing information relating to hardware state of each node as well as local and global network management activities in each node.

14. The network management system according to one of claims 11 to 13, whereby several or each node manager (1) has a master module (3), and each master module (3) could be set to the passive state or to the active state, whereby only in the active state the respective master module (3) has the said functionality, whereas in the passive state it mainly has the functionality of performing database synchronization.

15. The network management system according to claim 14, whereby each node further comprises a master controller module (7) for setting of the state of the respective master module (3).

## Patentansprüche

1. Verfahren zum Verwalten eines Netzes, insbesondere eines optischen Netzes, das mehrere Knoten aufweist, welche in einer willkürlichen Topologie so miteinander verbunden sind, dass sie in der Lage sind, Verkehr zwischen ausgewählten Knoten zu übertragen, umfassend die folgenden Schritte:
Bereitstellen eines Überwachungsnetzes mithilfe von Überwachungskanälen zwischen den Knoten;
Bereitstellen eines Knotenverwalters (1), welcher aus einem oder mehr Softwaremodulen besteht, in jedem Knoten;
Herstellen von Überwachungsverbindungen (10) über einen oder mehr Überwachungskanäle zwischen ausgewählten Knoten, durch welche der Knotenverwalter (1) mit anderen Knotenverwaltern (1) in anderen Knoten kommuniziert;
Bereitstellen eines Knotenmoduls (2) In jedem Knotenverwalter (1), das eine Schnittstelle zu den Hardwareeinstellungen der jeweiligen Knoten bereitstellt;
Bereitstellen eines Hauptmoduls (3) in wenigstens einem Knotenverwalter (1);
Herstellen von Überwachungsverbindungen (10) über einen oder mehr Überwachungskanäle zwischen ausgewählten Knoten, durch welche das Hauptmodul (3) mit den Knotenmodulen (2) kommuniziert;
Ändern und/oder Überwachen von Hardwareeinstellungen in ausgewählten Knoten mit dem jeweiligen Knotenmodul (2) des Knotens;
Steuern der Änderungen, die durch die Knotenmodule (2) durchgeführt werden, und/oder Verarbeiten der überwachten Hardwareeinstellungen durch das Hauptmodul (3),
und umfassend ferner die folgenden Schritte:
Bereitstellen eines Hauptmoduls (3) In mehreren oder allen Knotenverwaltern (1), wobei jedes Hauptmodul (3) entweder in einem aktiven oder einem passiven Zustand ist;
Versetzen eines einzigen Hauptmoduls (3) in den aktiven Zustand und Halten der anderen Hauptmodule (3) im oder Versetzen derselben in den passiven Zustand; wobei
ein Steuern der Änderungen, die durch die Knotenmodule (2) durchgeführt werden, und ein Verarbeiten der überwachten Hardwareeinstellungen nur durch das Hauptmodul (3), das im aktiven Zustand ist, durchgeführt werden;
**dadurch gekennzeichnet, dass** das Einstellen des Zustands der mehreren Hauptmodule (3) automatisch erfolgt.

2. Verfahren zum Verwalten eines Netzes nach Anspruch 1, umfassend ferner die folgenden Schritte:
periodisches Erzeugen von Testmeldungen in jedem Knoten und Austauschen dieser Meldungen unter allen Knoten, wobei jede Testmeldung Informationen über den Zustand des Hauptmoduls (3) des jeweiligen Knotens (2) enthält;
Verarbeiten der empfangenen Testmeldung in jedem Knoten und Einstellen des Zustands des Hauptmoduls (3) im jeweiligen Knoten in Abhängigkeit von den Informationen in den empfangenen Meldungen, derart dass stets ein einziges Hauptmodul (3) aller Knoten im aktiven Zustand ist.

3. Verfahren zum Verwalten eines Netzes nach Anspruch 2, umfassend ferner den Schritt des Versehens jedes Hauptmoduls (3) mit einem passiven Anfangszustand, wenn der Knotenverwalter (1) des jeweiligen Knotens initialisiert wird, und wobei das Umschalten des Zustands des Haupotmoduls (3) im jeweiligen Knoten gemäß einer der folgenden Entscheidungen erfolgt:
wenn das Hauptmodul (3) des Knotens im passiven Zustand ist und der Knoten wenigstens eine Testmeldung empfängt, die Informationen über ein Hauptmodul (3) eines anderen Knotens enthält, das Im aktiven Zustand ist, bleibt das Hauptmodul (3) des jeweiligen Knotens im passiven Zustand;
wenn das Hauptmodul (3) des Knotens im passiven Zustand ist und der Knoten innerhalb eines vorbestimmten Zeitintervalls keine Testmeldung empfängt, die Informationen über ein Hauptmodul (3) eines anderen Knotens enthält, das im aktiven Zustand ist, geht das Hauptmodul (3) des jeweiligen Knotens in den aktiven Zustand über.

4. Verfahren zum Verwalten eines Netzes gemäß Anspruch 2 oder 3, wobei jede Testmeldung, die in jedem Knoten erzeugt wird, ferner die Knoten-ID des jeweiligen Knotens enthält, und ein Umschalten des Zustands des Hauptmoduls (3) im jeweiligen Knoten gemäß einer der folgenden Entscheidungen erfolgt:
wenn das Hauptmodul (3) des Knotens im passiven Zustand ist und der Knoten wenigstens eine Testmeldung empfängt, die Informationen über ein Hauptmodul (3) eines anderen Knotens enthält, das im aktiven Zustand ist, bleibt das Hauptmodul (3) des jeweiligen Knotens im passiven Zustand;
wenn das Hauptmodul (3) des Knotens im passiven Zustand ist und der Knoten innerhalb eines vorbestimmten Zeitintervalls keine Testmeldung empfängt, die Informationen über ein Hauptmodul (3) eines anderen Knotens enthält, das im aktiven Zustand Ist, vergleicht der Knoten seine ID mit anderen empfangenen IDs unter Verwendung einer vorbestimmten Prozedur, und in Abhängigkeit vom Ergebnis dieser Prozedur, insbesondere wenn seine ID kleiner als andere empfangene IDs ist, geht das Hauptmodul (3) des jeweiligen Knotens in den aktiven Zustand über;
wenn das Hauptmodul (3) des Knotens im aktiven Zustand ist und der Knoten innerhalb eines vorbestimmten Zeitintervalls keine Testmeldung empfängt, die Informationen über ein Hauptmodul (3) eines anderen Knotens enthält, das im aktiven Zustand ist, bleibt das Hauptmodul (3) des jeweiligen Knotens im aktiven Zustand;
wenn das Hauptmodul (3) des Knotens im aktiven Zustand ist und der Knoten wenigstens eine Testmeldung empfängt, die Informationen über ein Hauptmodul (3) eines anderen Knotens enthält, das im aktiven Zustand ist, vergleicht der Knoten seine ID mit anderen empfangenen IDs unter Verwendung einer vorbestimmten Prozedur, und in Abhängigkeit vom Ergebnis dieser Prozedur, insbesondere wenn seine ID nicht kleiner als andere empfangene IDs ist, geht das Hauptmodul (3) des jeweiligen Knotens in den passiven Zustand über.

5. Verfahren zum Verwalten eines Netzes nach einem der Ansprüche 1 bis 4, umfassend ferner die folgenden Schritte:
das Knotenmodul (2) in jedem Knoten kommuniziert mit dem Hauptmodul (3) entweder durch einen vollen Satz von Überwachungsverbindungen (10) oder einen reduzierten Satz von Überwachungsverbindungen (10), wobei beim vollen Satz von Überwachungsverbindungen (10) jedes Knotenmodul (2) mit allen Hauptmodulen (3) kommuniziert, die in einem oder mehr Knoten vorhanden sind, insbesondere einerlei ob im aktiven Zustand oder passiven Zustand;
beim reduzierten Satz von Überwachungsverbindungen (10) jedes Knotenmodul (2) nur mit einem einzigen Hauptmodul (3), der in einem Knoten vorhanden ist, oder insbesondere mit einem einzigen Hauptmodul (3) in einem aktiven Zustand, das in einem Knoten vorhanden ist, kommuniziert.

6. Verfahren zum Verwalten eines Netzes nach einem der Ansprüche 2 bis 5, umfassend ferner die folgenden Schritte:
Bereitstellen eines Hauptsteuermoduls (7) in jedem Knoten, welches mit dem Hauptmodul (3) des jeweiligen Knotens verbunden ist;
die Hauptsteuermodule (7) von verschiedenen Knoten erzeugen, tauschen aus und verarbeiten die Testmeldungen und steuern den Zustand des Hauptmoduls (3) des jeweiligen Knotens.

7. Verfahren zum Verwalten eines Netzes nach Anspruch 6, wobei das Knotenmodul (2) in jedem Knoten nur mit dem Hauptmodul (3) im aktiven Zustand kommuniziert und im Falle eines Umschaltens des Zustands des Hauptmoduls (3) in den aktiven Zustand und eines weiteren Hauptmoduls (3) in den aktiven Zustand die Überwachungsverbindungen (10), durch welche die Kommunikation stattfindet, neu konfiguriert werden.

8. Verfahren zum Verwalten eines Netzes nach Anspruch 7, wobei das Hauptsteuermodul (7) des Knotens mit dem Hauptmodul (3), das in den aktiven Zustand umgeschaltet wurde, eine Neukonfigurationsmeldung an jeden Knoten sendet, der die ID seines Knotens enthält.

9. Verfahren zum Verwalten eines Netzes nach einem der Ansprüche 1 bis 8, umfassend ferner die folgenden Schritte:
Bereitstellen einer Datenbank, die Informationen in Bezug auf den Hardwarezustand jedes Knotens, sowie lokale und globale Netzverwaltungsaktivitäten in jedem Knoten enthält;
Synchronisieren der Datenbank in jedem Knoten gemäß den folgenden Schritten:
bevor ein Hauptmodul (3) in den aktiven Zustand versetzt wird, sendet der entsprechende Knoten, insbesondere das Hauptsteuermodul (7) des entsprechenden Knotens, den aktuellen Zustand der Datenbank des entsprechenden Knotens an alle anderen Knoten, insbesondere die Hauptsteuerung (7) aller anderen Knoten;
die empfangenden Knoten, insbesondere die Hauptsteuermodule (7) der empfangenden Knoten, synchronisieren ihre Datenbank mit dem empfangenen Zustand der Datenbank.

10. Verfahren zum Verwalten eines Netzes nach Anspruch 9, umfassend ferner die folgenden Schritte:
das Hauptmodul (3) in jedem Knoten informiert die Hauptsteuerung (7) im entsprechenden Knoten über alle Änderungen in der Datenbank des Knotens;
die Hauptsteuerung (7) sendet diese Änderungen an andere Hauptsteuerungen (7) in allen anderen Knoten;
wenn ein Knoten nach einer Störung aufkommt, fordert die Hauptsteuerung (7) in diesem Knoten den aktuellen Zustand der Datenbank von der Hauptsteuerung (7) des Knotens mit dem Hauptmodul (3) im aktiven Zustand an, um seine Datenbank mit der Datenbank des Knotens mit dem Hauptmodul (3) im aktiven Zustand zu synchronisieren.

11. Netzverwaltungssystem eines Netzes, das mehrere Knoten aufweist, welche in einer willkürlichen Topologie so miteinander verbunden sind, dass sie in der Lage sind, Verkehr zwischen ausgewählten Knoten zu übertragen, wobei
die Knoten durch ein Überwachungsnetz miteinander verbunden sind, das durch Überwachungskanäle zwischen den Knoten vorgesehen ist;
jeder Knoten einen Knotenverwalter (1) aufweist, welcher mit anderen Knotenverwaltern (1) durch eine Überwachungsverbindung (10) kommuniziert, die über einen oder mehr Überwachungskanäle zwischen ausgewählten Knoten hergestellt wird;
jeder Knotenverwalter (1) ein Knotenmodul (2) umfasst, welches eine Schnittstelle zur Hardware dieses Knotens bereitstellt, was ein Ändern und Überwachen der Änderungen der Hardwareeinstellungen dieses Knotens ermöglicht;
wenigstens ein Knotenverwalter (1) ein Hauptmodul (3) umfasst, welches mit den verschiedenen Knotenmodulen (2) durch Überwachungsverbindungen (10) verbunden ist, die über einen oder mehr Überwachungskanäle zwischen ausgewählten Knoten hergestellt werden; das Hauptmodul (3) eine Funktionalität zum Steuern der Knotenmodule (2) und der Änderung der Hardwareeinstellungen und zum Verarbeiten der Hardwareeinstellungen, die durch die Knotenmodule (2) überwacht werden, bereitstellt;
wobei das Netzverwaltungssystem ausgestattet ist, um ein Verfahren nach einem der Ansprüche 1 bis 10 auszuführen.

12. Netzverwaltungssystem nach Anspruch 11, wobei das Hauptmodul (3) eine Schnittstelle zur Unterstützung einer oder mehrerer grafischer Benutzeroberflächen (GUI) umfasst, die sich in einem oder mehr Knoten befinden.

13. Netzverwaltungssystem nach Anspruch 11 oder 12, wobei das Hauptmodul (3) ein oder mehr Softwaremodule zur globalen und lokalen Netzverwaltung und insbesondere ein oder mehr Softwaremodule für datenbankbezogene Aufgaben und Merkmale für eine Datenbank umfasst, die Informationen in Bezug auf einen Hardwarezustand jedes Knotens, sowie lokale und globale Netzverwaltungsaktivitäten in jedem Knoten enthält.

14. Netzverwaltungssystem nach einem der Ansprüche 11 bis 13, wobei mehrere oder jeder Knotenverwalter (1) ein Hauptmodul (3) aufweist, und jedes Hauptmodul (3) in den passiven Zustand oder in den aktiven Zustand versetzt werden könnte, wobei das jeweilige Hauptmodul (3) nur im aktiven Zustand die erwähnte Funktionalität hat, während sie im passiven Zustand hauptsächlich die Funktionalität des Durchführens einer Datenbanksynchronisierung hat.

15. Netzverwaltungssystem nach Anspruch 14, wobei jeder Knoten ferner ein Hauptsteuermodul (7) zum Einstellen des Zustands des jeweiligen Hauptmoduls (3) umfasst.

## Revendications

1. Procédé d'administration d'un réseau, en particulier d'un réseau optique, comprenant une pluralité de noeuds interconnectés selon une topologie quelconque de manière à pouvoir acheminer des transmissions entre des noeuds sélectionnés, comprenant les étapes de :
création d'un réseau de supervision au moyen de canaux de supervision entre les noeuds ;
création d'un administrateur de noeud (1) composé d'un ou plusieurs modules logiciels dans chaque noeud ;
création de connexions de supervision (10) sur un ou plusieurs canaux de supervision entre des noeuds sélectionnés, par lesquelles l'administrateur de noeud (1) communique avec d'autres administrateurs de noeud (1) dans d'autres noeuds ;
création d'un module de noeud (2) dans chaque administrateur de noeud (1) qui crée une interface vers les réglages matériels du noeud en question ; création d'un module maître (3) dans au moins un administrateur de noeud (1) ;
établissement de connexions de supervision (10) sur un ou plusieurs canaux de supervision entre des noeuds sélectionnés, par lesquelles le module maître (3) communique avec les modules de noeud (2) ;
modification et/ou surveillance des réglages matériels dans des noeuds sélectionnés avec le module de noeud (2) des noeuds en question ;
contrôle des modifications apportées par les modules de noeud (2) et/ou traitement des réglages matériels surveillés par le module maître (3),
et comprenant en outre les étapes de
création d'un module maître (3) dans plusieurs ou tous les administrateurs de noeud (1), de sorte que chaque module maître (3) est dans un état actif ou un état passif ;
réglage d'un seul module maître (3) dans l'état actif et maintien ou réglage des autres modules maîtres (3) dans l'état passif,
le contrôle des modifications apportées par les modules de noeud (2) et/ou le traitement des réglages matériels surveillés étant effectués uniquement par le module maître (3) qui est dans l'état actif ;
**caractérisé en ce que** la définition de l'état des multiples modules maîtres (3) s'effectue automatiquement.

2. Procédé d'administration d'un réseau selon la revendication 1, comprenant en outre les étapes de :
génération périodique de messages de signe de vie dans chaque noeud et échange de ces messages entre tous les noeuds, chaque message de signe de vie contenant des informations sur l'état du module maître (3) du noeud correspondant ;
traitement du message de signe de vie reçu dans chaque noeud et réglage de l'état du module maître (3) du noeud correspondant en fonction des informations des messages reçus, de telle manière qu'à tout moment, un seul module maître (3) parmi tous les noeuds se trouve dans l'état actif.

3. Procédé d'administration d'un réseau selon la revendication 2, comprenant en outre l'étape de fourniture à chaque module maître (3) d'un état passif initial lorsque l'administrateur de noeud (1) du noeud correspondant est initialisé, de sorte que le changement de l'état du module maître (3) dans le noeud correspondant est réalisé en fonction de l'une des décisions suivantes :
si le module maître (3) du noeud est dans l'état passif et que le noeud reçoit au moins un message de signe de vie contenant des informations sur un module maître (3) d'un autre noeud qui est dans l'état actif, le module maître (3) du noeud correspondant reste dans l'état passif ;
si le module maître (3) du noeud est dans l'état passif et que le noeud ne reçoit pas de message de signe de vie contenant des informations sur un module maître (3) d'un autre noeud qui est dans l'état actif dans un intervalle de temps prédéterminé, le module maître du noeud correspondant passe dans l'état actif.

4. Procédé d'administration d'un réseau selon la revendication 2 ou 3, dans lequel chaque message de signe de vie généré dans chaque noeud contient en outre l'identifiant de noeud du noeud correspondant et l'état du module maître (3) dans le noeud correspondant est modifié selon l'une des décisions suivantes :
si le module maître (3) du noeud est dans l'état passif et que le noeud reçoit au moins un message de signe de vie contenant des informations sur un module maître (3) d'un autre noeud qui est dans l'état actif, le module maître (3) du noeud correspondant reste dans l'état passif ;
si le module maître (3) du noeud est dans l'état passif et que le noeud ne reçoit aucun message de signe de vie contenant des informations sur un module maître (3) d'un autre noeud qui est dans l'état actif dans un délai prédéterminé, le noeud compare son identifiant aux autres identifiants reçus selon une procédure déterminée et, en fonction du résultat de cette procédure, en particulier si son identifiant est inférieur aux autres identifiants reçus, le module maître (3) du noeud correspondant passe dans l'état actif ; si le module maître (3) du noeud est dans l'état actif et que le noeud ne reçoit aucun message de signe de vie contenant des informations sur un module maître (3) d'un autre noeud qui est dans l'état actif dans un délai prédéterminé, le module maître (3) du noeud correspondant reste dans l'état actif ;
si le module maître (3) du noeud est dans l'état actif et que le noeud reçoit au moins un message de signe de vie contenant des informations sur un module maître (3) d'un autre noeud qui est dans l'état actif, le noeud compare son identifiant aux autres identifiants reçus selon une procédure prédéterminée et, en fonction du résultat de cette procédure, en particulier si son identifiant n'est pas inférieur aux autres identifiants reçus, le module maître (3) du noeud correspondant passe dans l'état passif.

5. Procédé d'administration d'un réseau selon l'une des revendications 1 à 4, comprenant en outre les étapes suivantes :
le module de noeud (2) de chaque noeud communique avec le module maître (3) soit par un ensemble complet de connexions de supervision (10), soit par un ensemble réduit de connexions de supervision (10),
chaque module de noeud (2) communiquant, dans l'ensemble complet de connexions de supervision (10), avec tous les modules maîtres (3) présents dans un ou plusieurs noeuds, en particulier qu'ils soient dans l'état actif ou passif ;
chaque module de noeud (2) communiquant, dans l'ensemble réduit de connexions de supervision (10), avec un seul module maître (3) présent dans un noeud, en en particulier avec un module maître (3) dans l'état actif présent dans un noeud.

6. Procédé d'administration d'un réseau selon l'une des revendications 2 à 5, comprenant en outre les étapes de :
création d'un module de contrôle du maître (7) dans chaque noeud, qui est connecté au module maître (3) du noeud correspondant ;
les modules de contrôle du maître (7) de différents modules génèrent, échangent et traitent les messages de signe de vie et contrôlent l'état du module maître (3) du noeud correspondant.

7. Procédé d'administration d'un réseau selon la revendication 6, dans lequel le module de noeud (2) de chaque noeud communique uniquement avec le module maître (3) dans l'état actif et, si le module maître (3) passe dans l'état actif et un autre module maître dans l'état passif, les connexions de supervision (10) par lesquelles passe la communication sont reconfigurées.

8. Procédé d'administration d'un réseau selon la revendication 7, dans lequel le module de contrôle du maître (7) du noeud dont le module maître (3) est passé dans l'état actif envoie un message de reconfiguration à chaque noeud contenant l'identifiant de son noeud.

9. Procédé d'administration d'un réseau selon l'une des revendications 1 à 8, comprenant en outre les étapes de :
création d'une base de données contenant des informations relatives à l'état matériel de chaque noeud ainsi qu'aux activités locales et globales d'administration du réseau de chaque noeud ;
synchronisation de la base de données de chaque noeud selon les étapes suivantes
avant qu'un module maître (3) soit réglé dans l'état actif, le noeud correspondant, en particulier le module de contrôle du maître (7) du noeud correspondant, envoie l'état actuel de la base de données du noeud correspondant à tous les autres noeuds, en particulier au contrôleur du maître (7) de tous les autres noeuds;
les noeuds récepteurs, en particulier les modules de contrôle du maître (7) des noeuds récepteurs, synchronisent leur base de données avec l'état reçu de la base de données.

10. Procédé d'administration d'un réseau selon la revendication 9, comprenant en outre les étapes suivantes :
le module maître (3) de chaque noeud informe le contrôleur du maître (7) du noeud correspondant des changements dans la base de données du noeud ; le contrôleur du maître (7) envoie ces changements aux autres contrôleurs du maître (7) de tous les autres noeuds;
lorsqu'un noeud est activé après une défaillance, le contrôleur du maître (7) de ce noeud demande l'état actuel de la base de données au contrôleur du maître (7) du noeud dont le module maître (3) est dans l'état actif afin de synchroniser sa base de données avec la base de données du noeud dont le module maître (3) est dans l'état actif.

11. Système d'administration de réseau pour un réseau comprenant une pluralité de noeuds interconnectés selon une topologie quelconque de manière à pouvoir acheminer des transmissions entre des noeuds sélectionnés, dans lequel
les noeuds sont interconnectés par un réseau de supervision formé par des canaux de supervision entre les noeuds;
chaque noeud possède un administrateur de noeud (1) qui communique avec d'autres administrateurs de noeud (1) par une connexions de supervision (10) établies sur un ou plusieurs canaux de supervision entre des noeuds sélectionnés ;
chaque administrateur de noeud (1) contient un module de noeud (2) qui crée une interface vers le matériel de ce noeud permettant de modifier et de surveiller les modifications des réglages matériels de ce noeud ;
un administrateur de noeud (1) au moins comprend un module maître (3) qui est connecté aux différents modules de noeud (2) par des connexions de supervision (10) établies sur un ou plusieurs canaux entre des noeuds sélectionnés ;
le module maître (3) assure la fonction de contrôle des modules de noeud (2) et la modification des réglages matériels ainsi que le traitement des réglages matériels surveillés par les modules de noeud (2) ;
le système d'administration de réseau étant équipé pour exécuter un procédé selon l'une des revendications 1 à 10.

12. Système d'administration de réseau selon la revendication 11, dans lequel le module maître (3) comprend une interface pouvant prendre en charge une ou plusieurs interfaces utilisateur graphiques (GUI) situées dans un ou plusieurs noeuds.

13. Système d'administration de réseau selon la revendication 11 ou 12, dans lequel le module maître (3) comprend un ou plusieurs modules logiciels pour l'administration globale et locale du réseau et en particulier un ou plusieurs modules logiciels pour les tâches et fonctions de base de données pour une base de données contenant des informations relatives à l'état matériel de chaque noeud ainsi qu'aux activités d'administration globale et locale de réseau de chaque noeud.

14. Système d'administration de réseau selon l'une des revendications 11 à 13, dans lequel plusieurs ou chaque administrateur de noeud (1) possèdent un module maître (3) ; et
chaque module maître (3) pourrait être réglé dans l'état passif ou l'état actif, le module maître (3) en question n'ayant ces fonctionnalités que dans l'état actif, tandis que dans l'état passif il a principalement pour fonction d'exécuter la synchronisation de la base de données.

15. Système d'administration de réseau selon la revendication 14, dans lequel chaque noeud comporte en outre un module de contrôle du maître (7) qui règle l'état du module maître (3) correspondant.
